Europäisches Patentamt

European Patent Office

Office européen des brevets

(11) Publication number: **0 271 618**
**A1**

## (12) EUROPEAN PATENT APPLICATION

(21) Application number: **86309752.3**

(22) Date of filing: **15.12.86**

(51) Int. Cl.⁴: **B01J 20/20 , B01D 53/34**

(43) Date of publication of application:
**22.06.88 Bulletin 88/25**

(84) Designated Contracting States:
**DE FR GB IT NL**

(71) Applicant: **CALGON CARBON CORPORATION**
**Route 60 Campbell's Run Road**
**Robinson Township Pennsylvania 15205(US)**

(72) Inventor: **Matviya, Thomas M.**
**100 Westpointe Drive Apartment 119**
**Pittsburgh Pennsylvania 15205(US)**
Inventor: **Gebhard, Robert S.**
**48 Greenbriar Drive**
**Pittsburgh Pennsylvania 15220(US)**
Inventor: **Greenbank, Michael**
**5010 Park Lane**
**Monaca Pennsylvania 15061(US)**

(74) Representative: **Pattullo, Norman et al**
**Ian G. Murgitroyd and Company Mitchell**
**House 333 Bath Street**
**Glasgow G2 4ER Scotland(GB)**

(54) **Mercury absorbent carbon molecular sieves.**

(57) The instant invention is directed to a carbon molecular sieve, having a nitrogen diffusivity of less than $2600 \times 10^{-8}$ cm²/second, impregnated with from about 0.005 to about 15 percent, by weight, of a mercury reactive material.

The instant invention is also directed to a process for removing mercury vapor from gas streams which comprises passing a gas stream containing mercury vapor into contact with a carbon molecular sieve, having a nitrogen diffusivity of less than $2600 \times 10^{-8}$ cm²/second, impregnated with from about 0.005 to about 15 percent, by weight, of a mercury reactive material.

EP 0 271 618 A1

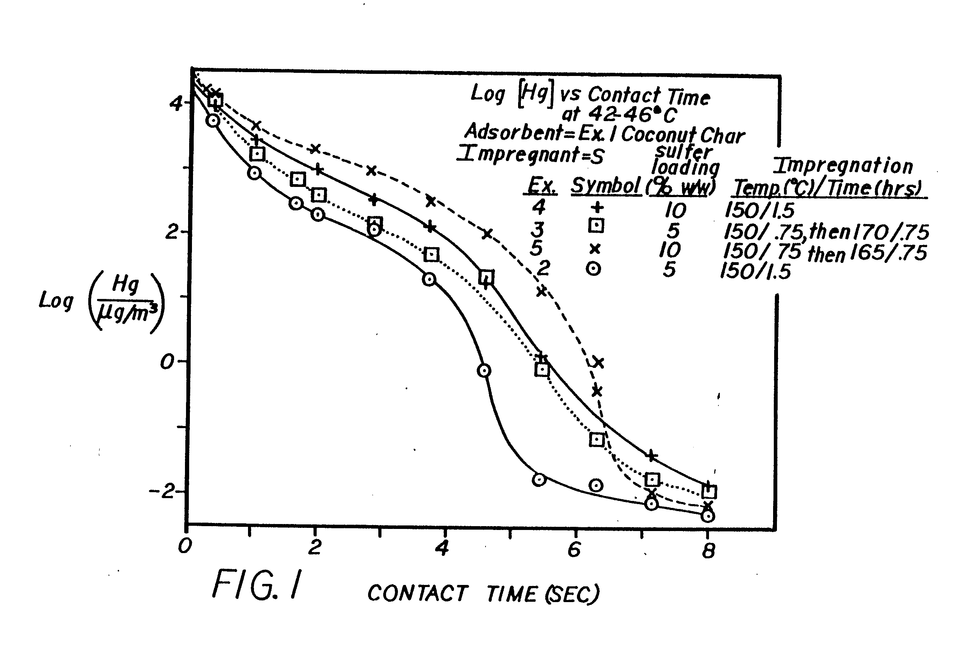

FIG. 1    CONTACT TIME (SEC)

## MERCURY ADSORBENT CARBON MOLECULAR SIEVES AND PROCESS FOR REMOVING MERCURY VAPOR FROM GAS STREAMS

BACKGROUND OF THE INVENTION

Today, many commercial adsorbents are used for hundreds of purification applications. These include purification of foods, water, air, chemicals, and pharmaceuticals. Of the commercially developed adsorbents, activated carbon is the most widely employed.

Nonetheless, Researchers became interested in developing adsorbents which would separate molecules based on differences in their molecular size. Their work led to the development of zeolite sieves, launching a new era of separation technology. Zeolite sieves are used today for chemical separations; as isomerization and cracking catalysts; for chemical enrichment; and as chemical carriers. For all their versatility, however, zeolite sieves have limitations making them impractical for many applications. For instance, they are not as chemically inert as carbon, and frequently can't be applied because of reactive properties, e.g., the effect of water vapor with adsorbent useful life.

Mercury vapor has been removed from gas streams by a number of different adsorbents. See, for example, U.S. Patent 3,194,629 (to Dreibelbis) describing activated carbon impregnated with potassium triiodide or sulfur; U.S. Patent 3,876,393 (to Kasai) describing activated carbon impregnated with sulfuric acid; U.S. Patent 3,193,987 (to Manes, et al.) describing activated carbon impregnated with silver or copper salts; and U.S. Patent 4,101,631 (to Ambrosini) describing zeolites containing elemental sulfur.

Generally, these activated carbon adsorbents are only effective when relatively large concentrations of mercury are present. Each adsorbent has a lower limit, below which, mercury vapor is either inefficiently adsorbed, or not adsorbed at all.

The recent development of carbon molecular sieves paves the way for new separation applications that heretofore were impractical with other adsorbents.

The key to the performance of carbon molecular sieves is their specific ability to separate molecules based on miniscule differences in their size, a process known as molecular screening. In this sense, carbon molecular sieves function very much like zeolite sieves, but they also exhibit many of the properties of activated carbon, e.g., high efficiency, inertness, and regenerability, which promises to make them broadly applicable.

Carbon molecular sieves differ from activated carbon in that they have a narrower range of pore openings than those associated with activated carbon. This allows small molecules to diffuse into the pores, and to be separated from larger molecules too large to enter the pore. The small molecules are physically adsorbed and thus removed from the gas stream by the carbon molecular sieve. The larger molecule will bypass the sieve and therefore be separated and effectively recovered.

It would be an advance in the art if it were shown that carbon molecular sieves could be impregnated with a mercury reactive material, making them effective adsorbents, especially at very low concentrations of mercury vapor. It also would be most useful if such carbon molecular sieves, impregnated with a mercury reactive material, were less adversely affected by ambient water vapor than the prior art mercury vapor adsorbents.

DESCRIPTION OF THE INVENTION

The present invention addresses the perennial problem of equipment damage caused by mercury vapor contamination, often found in industrial process gas streams. It then provides a carbon sieve-based adsorbent that is markedly superior to the adsorbents employed heretofore, be they impregnated zeolitic sieves or impregnated activated carbons of the cited prior art, whatever the specific impregnating reagent that is coupled with the adsorbent.

It has been discovered that carbon molecular sieves impregnated with a mercury reactive material are effective adsorbents especially of very low concentrations of mercury vapor. It was also found that carbon molecular sieves impregnated with sulfur and other materials are less adversely affected by water and temperature than the prior art adsorbents.

The instant invention is directed to a carbon molecular sieve, having a nitrogen diffusivity of less than $2600 \times 10^{-8}$ cm²/second, impregnated with from about 0.005 to about 15, preferably 0.01 to 10, most preferably 3 to 7, percent, by weight, of a mercury reactive material.

The instant invention is also directed to a process for removing mercury vapor from gas streams which comprises passing a gas stream containing mercury vapor into contact with a carbon molecular sieve, having a nitrogen diffusivity of less than $2600 \times 10^{-8}$ cm$^2$/second, impregnated with from about 0.005 to about 15 percent, by weight, of a mercury reactive material.

Carbon molecular sieves impregnated with from 0.005 to 15 weight percent, preferably 0.01 to 10 weight percent, most preferably from 3 to 7 weight percent of a mercury reactive material are useful adsorbents for removing mercury vapor from gas streams, especially at low level mercury vapor concentrations. The sieves are especially effective at mercury vapor concentrations, P, at a given pressure and temperature, defined as $P<(4\times10^{-6})\times P_s$, preferably $P<(1\times10^{-6})\times P_s$, where $P_s$ is the mercury vapor saturation pressure at the aforementioned given pressure and temperature. For instance, at 22°C., this corresponds to 0.064 to 0.016 micrograms/Nm$^3$.

Carbon molecular sieves are porous substrates with an open-network structure of controlled molecular dimension which may be used to separate mixtures of small molecules from larger molecules, based on a difference in molecular size or a difference in diffusivity rates. U.S. Patent 3,884,830, which is hereby incorporated by reference, describes the manufacture of an activated carbon molecular sieve.

Carbon molecular sieves have been prepared from a variety of substrates by a number of different manufacturing processes. Examples include anthracite coal (U.S. Patent 3,222,412); coke or coconut shells, elevated temperatures and pore blocking by carbon deposition (U.S. Patent 3,801,513); vinylidene chloride copolymers (U.S. Patent 4,046,709); and bituminous coal or coconut shells, elevated temperatures and an inert atmosphere (U.S. Patent 2,556,859). The preferred substrates are coal and nut shells.

Carbon molecular sieves may also be defined in the present invention as having a nitrogen diffusivity of less than $2600\times10^{-8}$ cm$^2$/second, preferably $1\times10^{-8}$ cm$^2$/second to $2600\times10^{-8}$ cm$^2$/second, more preferably $10\times10^{-8}$ cm$^2$/second to $2600\times10^{-8}$ cm$^2$/second, and most preferably $10\times10^{-8}$ cm$^2$/second to $300\times10^{-8}$ cm$^2$/second, prior to impregnation.

Examples of the mercury reactive materials which may be used include oxidizing agents and amalgamating metals. Examples of oxidizing agents include S; FeCl$_3$ sulfides, such as CuS, AgS; KI$_3$; KIO$_3$; NaOCl; MnO$_2$; and PbCl$_2$. Examples of metals include: gold, silver, tin and copper.

The removal of mercury vapor form the aforementioned gas streams with the carbon molecular sieves may be accomplished in any manner available to the skilled artisan. Generally, the gas stream is contracted with a quantity of the mercury reactive material impregnated carbon molecular sieves. This may be accomplished in one or more adsorbent beds, through which the mercury vapor laden gas is passed. There may also be employed additional mercury adsorbents, such as mercury reactive material containing zeolite and/or the activated carbon described in U.S. Patent 3,194,629. These adsorbents are commercially available from Union Carbide Corporation and Calgon Carbon Corporation, respectively.

Gas streams contemplated to come within the scope of this invention include natural gas streams; industrial gas streams contaminated with mercury, such as hydrogen gas from a chlor-alkali plant, furnace stack gases, battery disposal incinerator gases and the like; air, hydrocarbon gases, carbon dioxide, carbon monoxide, oxygen, nitrogen, and the like.

Many carbon molecular sieves may be used. Examples include CMX-1 and MSC-V, both manufactured by Calgon Carbon Corporation and Bergbau C.M.S., for air separation. CMX-1 and the Bergbau C.M.S. are non-activated carbon molecular sieves. MSC-V is a slightly activated carbon molecular sieve.

The sieves may be impregnated with established mercury reactive material in any convenient manner. For example, solid elemental sulfur and granular carbon molecular sieves may be admixed and heated at about 150°C. Additional heating at about 150°C or above for from 10 to 90 minutes causes complete impregnation of the sieve pores by the sulfur. Alternatively, the sulfur may be dissolved in a solvent such as carbon disulfide, and the solvent contacted with the carbon molecular sieves. Typical methods include spraying, dipping, and the like. Excess solution is removed by decanting or filtering and the sieve is dried. Drying may be accomplished at room temperature, or at elevated temperatures. Vacuum may also be employed to aid in removing solvent.

## BRIEF DESCRIPTION OF THE DRAWING

Figure 1 is a multicurve plot of the measured performance data obtained per the present invention. Coordinates presented are the log of the mercury vapor concentration during adsorption, plotted against the contact time for the mercury vapor containing airstream, for a specific candidate mercury adsorbent (CMX-1), as produced in Examples 2, 3, 4, and 5 of the Specification;

Figure 2 is a two curve plot of the performance data, using the identical coordinates seen in Figure 1, comparing an exemplary impregnated C.M.S. of Example 6 with a sulfur impregnated zeolite adsorbent of the prior art as to its mercury vapor removal limit;

Figure 3 is a two curve plot of the performance data, using the identical coordinates seen in Figure 1, but with the airstream at an appreciably lower temperature than in Example 6, comparing the performance of the same impregnated C.M.S. material with the same impregnated zeolite material of Example 6;

Figure 4 is a multicurve plot of measured performance data, using the identical coordinates of Figure 1, comparing the impregnated C.M.S. material of Example 7 with a sulfur impregnated, coconut shell-based, activated carbon (herein GRC-11 carbon), and the effect of $H_2O$ saturated air carrier gas;

Figure 5 is a single curve plot of performance data, using the identical coordinates of Figure 1, of another exemplary C.M.S. material of Example 8, using ferric chloride hydrate as the sieve impregnating agent;

Figure 6 is a single curve plot of performance data, using the identical coordinates of Figure 1 of another exemplary C.M.S. material of Example 9, using an alkali metal triiodide salt as the impregnating agent;

Figure 7 (comparison example 10) is a single curve plot of performance data, using the identical coordinates of Figure 1, of a coal-based activated carbon, using sulfur impregnation (herein called modified BPL carbon) of the prior art;

Figure 8 is a single curve plot of performance data, using the identical coordinates of Figure 1, of another C.M.S. material, impregnated with sulfur, initially slightly-activated, then per Example 11 (herein MSC-V grade of C.M.S.);

Figure 9 is a single curve plot of performance data, using identical coordinates of Figure 1, of a babassu nut char-based molecular sieve carbon, impregnated with sulfur (herein MSC-V); and

Figure 10 is a two curve plot of performance data, using the identical coordinates of Figure 1, of another C.M.S. material, impregnated with sulfur, reflecting the effect on mercury removal of the entry concentration of mercury vapor in the airstream into the adsorbent zone; and

Figure 11 is a multicurve plot of performance data, using identical coordinates of Figure 1, of a coal-based activated carbon, using sulfur impregnation (modified BPL adsorbent) reflecting the effect of the entry concentration of mercury vapor in the airstream, upon the estimated contact time to reach a vapor removal limit at the stated conditions of Example 14, compared to the CMX-1 adsorbents of the preceding examples.

The Specification recitations use of the terms nitrogen diffusivity and oxygen/nitrogen selectivity ratio (Example I) have importance as art-recognized means capable of distinguishing between molecular sieves having very small (microns Range) pore radii. The lower the numerical value measured for nitrogen diffusivity, (usually as $cm.^2$ per second), then the more narrow is the mean pore diameter. For a given separation of a gas mixture, (Selectivity Ratio), the narrower the pore size distribution, the more pronounced are the sieving properties.

Table I below presents a tabular summary of exemplary C.M.S. products of the invention, compared to certain prior art adsorbents, as denoted by measured mercury removal limit values and their equivalent nitrogen diffusivity values.

## TABLE I

| Carbon | Hg Vapor Removal Limit $(K^3m^3)$ 20 - 25°C Ambient Pressure | Nitrogen Diffusivity $(x10^{-8}\ cm^2/second)$ |
|---|---|---|
| BPL*[a] | .071 | 2786 |
| Bergbau[b] | .025 | 2.14 |
| CMX-1[a] | .0016 | 59.3 |
| MSC-V[a] | .004 | 2527 |
| GRC-II[a] | .0018 | 2200 |
| Babassu Nut | .0040 | 170 |

*Comparison (not a molecular sieve).

[a]Manufactured by Calgon Carbon Corporation.

[b]Manufactured by Bergbau Forshung.

EXAMPLES

Example 1 - Preparation of CMX-1

Coconut char was fed to an enclosed drive-belt furnace (22-inch belt width) at 30 pounds per hour. The furnace temperature was 1800°F and the furnace residence time was 30 minutes. A constant nitrogen purge, countercurrent to feed flow, was maintained at 25 standard cubic feet per minute (SCFM). The atmosphere was maintained at less than 500 ppm oxygen.

To calculate a test gas (e.g., oxygen, nitrogen, etc.) diffusivity value, the dead volume of a sample cell containing about 10 grams of carbon sieve was determined by helium expansion. The test gas was then expanded into the re-evacuated sample cell from a one-liter reference cell. Knowing the dead volume, adsorption (loading) of any test gas was monitored by the change in pressure of the system. These values combined with an equilibrium loading value calculated for a sieve sample after one hour (at STP) allowed the determination of a relative loading value $(L_t/L_e)$. $L_t$ was the test gas loading value of a sieve sample at a given time, for example 30 seconds, and $L_e$ was the test gas loading value of a sieve sample at equilibrium. The gas diffusivity value (D) of a sieve sample was then calculated for the test gas by solving the simplified equation for diffusion into a sphere:

$$L_t/L_e = 6(Dt/oR_0^2)^{1/2} - 3Dt/R_0^2$$

where

D = gas diffusivity value

t = time in seconds

$R_o$ = mean particle radius of a carbon sieve (0.05125 cm)

See: R. L. Dedrick and R. B. Beckmann, "Kinetics of Adsorption by Activated Carbon from Dilute Aqueous Solution", Physical Adsorption Processes and Principles, L. N. Canjar and J. A. Kostecki, eds., Vol. 63, American Institute of Chemical Engineers, New York (1967); P. L. Walker, Jr., L. G. Austin and S. P. Nandi, "Activated Diffusion of Gases in Molecular Sieve Materials", The Chemistry and Physics of Carbon, P. L. Walker, Jr., ed., Vol. 2, Marcel Dekker, Inc., New York (1966) and J. Crank, "The Mathematics of Diffusion", 2nd Ed., Clarendon Press, Oxford (1975).

Determination of oxygen and nitrogen diffusivity values allowed for calculation of the oxygen/nitrogen selectivety ratio: $S = DO_2/DN_2$.

A carbon sieve having the following physical characteristics was produced:

| | | |
|---|---|---|
| (A) | oxygen diffusivity x $10^{-8}$ cm/sec$^2$ | 693 |
| (B) | oxygen/nitrogen selectivity ratio | 7.19 |
| (C) | oxygen equilibrium volume STP gas cc/g carbon | 6.7 |
| (D) | oxygen equilibrium volume STP gas cc/cc bed volume carbon | 4.3 |
| (E) | apparent density g/cc | 0.64 |

Example 2

The carbon molecular sieve of Example 1 was mixed, at 150°C, with a sufficient quantity of sublimed elemental sulfur to provide a 5 percent (w/w) sulfur loading until the mixture was uniform. This mixture was then heated at 150°C for 90 minutes.

A dry air stream, having an inlet mercury concentration of 17,900 Kg/m³, was passed through a column containing the above-described sulfur impregnated CMX-1, at a linear velocity of 23 ft/min. The column and inlet air stream were maintained at a temperature of 42°C and ambient pressure. A contact time of 8 seconds was sufficient to reduce the mercury vapor concentration to .005 Kg/m³. The results are presented in FIGURE 1.

Example 3

The carbon molecular sieve of Example 1 was mixed, at 150°C, with a sufficient quantity of sublimed elemental sulfur to provide a 5 percent (w/w) sulfur loading until the mixture was uniform. This mixture was then heated at 150°C for 45 minutes and at 170°C for an additional 45 minutes.

A dry air stream, having an inlet mercury concentration of 30,800 Kg/m³, was passed through a column containing the above-described sulfur impregnated CMX-1, at a linear velocity of 23 ft/min. The column and inlet air stream were maintained at a temperature of 46°C and ambient pressure. A contact time of 8 seconds was sufficient to reduce the mercury vapor concentration to .012 Kg/m³. The results are presented in FIGURE 1.

Example 4

The carbon molecular sieve of Example 1 was mixed, at 150°C, with a sufficient quantity of sublimed elemental sulfur to provide a 10 percent (w/w) sulfur loading until the mixture was uniform. This mixture was then heated at 150°C for 90 minutes.

A dry air stream, having an inlet mercury concentration of 22,700 Kg/m³, was passed through a column containing the above-described sulfur impregnated CMX-1, at a linear velocity of 23 ft/min. The column and inlet air stream were maintained at a temperature of 44°C and ambient pressure. A contact time of 8 seconds was sufficient to reduce the mercury vapor concentration to .014 Kg/m³. The results are presented in FIGURE 1.


## Example 5

The carbon molecular sieve of Example 1 was mixed, at 150°C, with a sufficient quantity of sublimed elemental sulfur to provide a 10 percent (w/w) sulfur loading until the mixture was uniform. The mixture was then heated at 150°C for 45 minutes and at 165°C for an additional 45 minutes.

A dry air stream, having an inlet mercury concentration of 21,200 Kg/m³, was passed through a column containing the sulfur impregnated coconut char, at a linear velocity of 23 ft/min. The column and inlet air stream were maintained at a temperature of 44°C and ambient pressure. A contact time of 8 seconds was sufficient to reduce the mercury vapor concentration to .008 Kg/m³. The results are presented in FIGURE 1.


## Example 6

Dry air, having a high mercury vapor concentration, was passed through the carbon molecular sieve of Example 1 impregnated with sulfur (5 percent sulfur loading, impregnated at 150°C for 90 minutes heating time) at ambient pressure and temperatures of 20°C and 42°C. Ports situated along the length of the column were sampled to determine the mercury vapor concentration in the air after known contact times with the adsorbent. The linear flowrate of the air was 23 ft/min.

The above procedure was repeated at 18°C and 42°C with the sulfur impregnated carbon molecular sieve of Example 1 being replaced with Union Carbide 1/16 mole sieve (a sulfur impregnated zeolite mercury adsorbent).

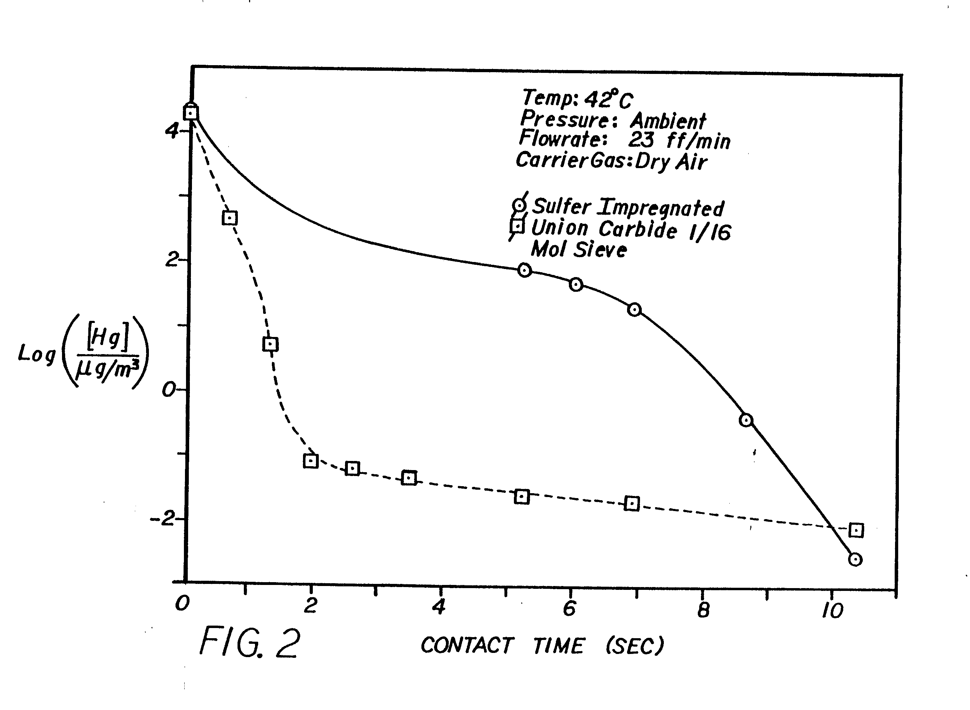

Results (FIGURE 2) obtained at 42°C show the mercury vapor removal limit of the sulfur impregnated zeolite (0.008 Kg/m³) to be inferior to that of the sulfur impregnated Example 1 carbon (.003 Kg/m³). It should also be noted that the removal limit of the carbon molecular sieve does not appear to be highly dependent on the mercury partial pressure.

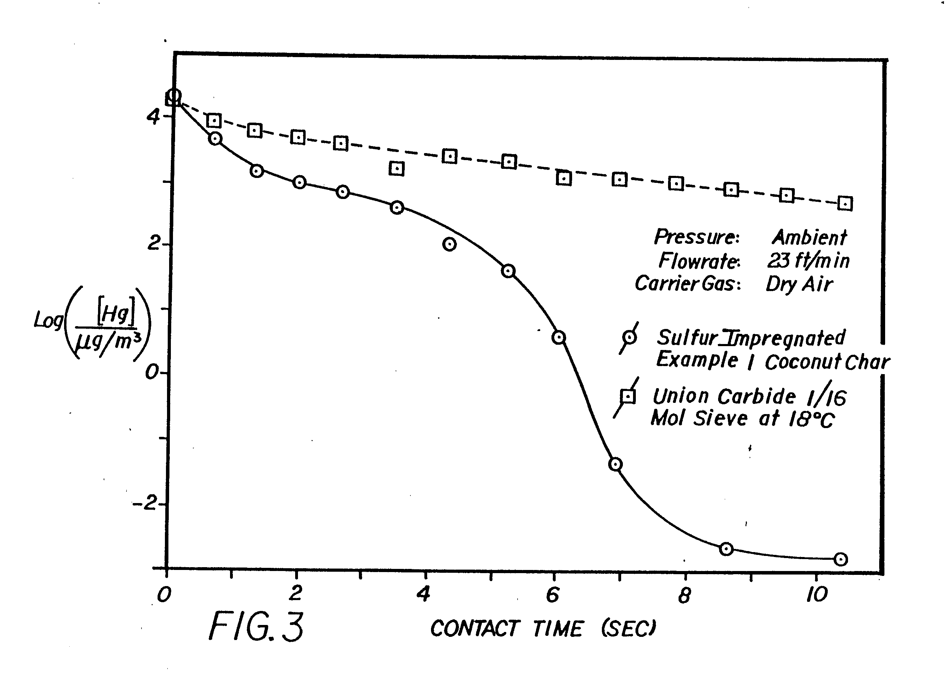

Results (FIGURE 3) obtained at lower temperatures (18 and 20°C) show the Union Carbide mole sieve (at 18°C) to be ineffective due to very poor mercury vapor removal kinetics. The sulfur impregnated coconut char has a mercury vapor removal limit of <.002 Kg/m³ at a nearly equivalent temperature (20°C).


## Example 7

Dry air, having a high mercury vapor concentration, was passed through a column containing the carbon molecular sieve of Example 1 impregnated with sulfur (5 percent sulfur loading, impregnated at 150°C, followed by heating at 150°C for 90 minutes) at a linear flowrate of 23 ft/min. Pressure and temperature were ambient. Ports situated along the length of the column were sampled to determine the mercury vapor concentration in the air after known contact times with the adsorbent.

This procedure was repeated with H₂O saturated air replacing the dry air. The H₂O saturated air stream had been passed through the column for 16 hours before analysis was performed.

Both of the above procedures were repeated with sulfur impregnated GRC-II (15 percent w/w sulfur, impregnated at 150°C followed by heating at 150°C for 90 minutes) replacing the sulfur impregnated coconut char described above.

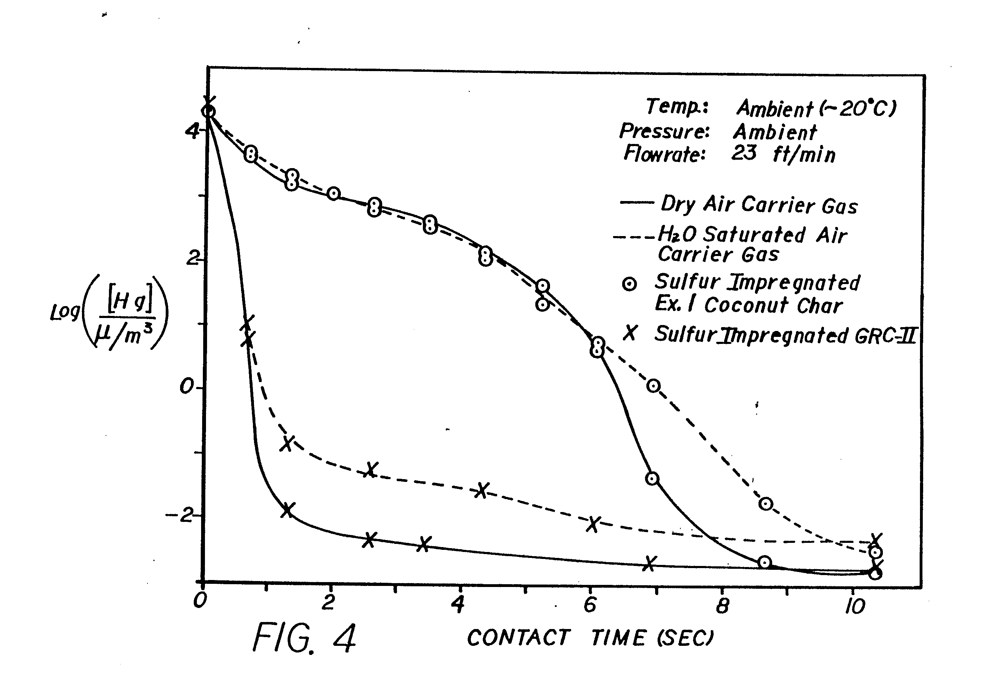

GRC-II is a coconut shell-based carbon. GRC-II is an activated carbon. As expected, the mercury vapor removal limit is the same for both carbons (FIGURE 4) for dry adsorber beds.

As may be seen in FIGURE 4, the mercury vapor removal limit of the sulfur impregnated GRC-II is severely affected by adsorbed H₂O, while that of the sulfur impregnated coconut char is less severely affected due to its pore size being so constricted as to inhibit easy adsorption of H₂O.

## Example 8

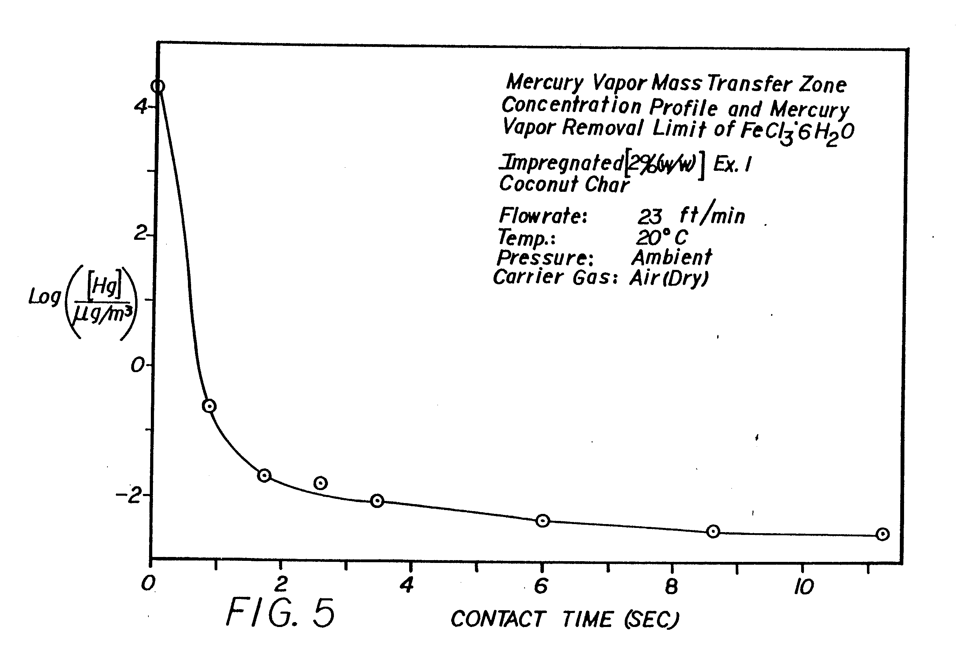

The carbon molecular sieve of Example 1 was sprayed with an aqueous solution of ferric chloride (14 g of FeCl$_3$.6H$_2$O, 100 ml of H$_2$O, 700 g CMX-1). The resulting damp carbon was air dried several days. The impregnated carbon was placed in a column through which mercury vapor saturated air was passed at 20°C. Ports situated along the length of the column were sampled to determine the mercury vapor concentration in the air after known contact times with the adsorbent. The linear flow rate of the air was 23 ft/min. Results are presented in FIGURE 5.

## Example 9

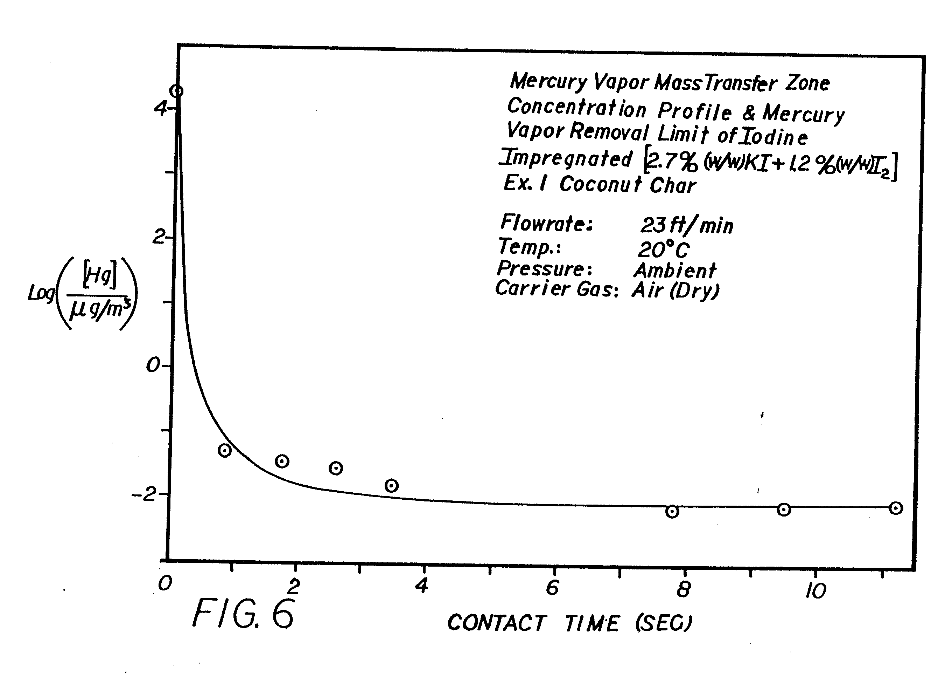

The carbon molecular sieve of Example 1 was sprayed with an aqueous solution of potassium triiodide (19.0 g KI, 8.5 g I$_2$, 300 cc H$_2$O, 700 g CMX-I). The resulting damp carbon was air dried several days. The impregnated carbon was placed in a column through which mercury vapor saturated air was passed at 20°C. Ports situated along the length of the column were sampled to determine the mercury vapor concentration in the air after known contact times with the adsorbent. The linear flow rate of the air was 23 ft/min. Results are presented in FIGURE 6.

## Example 10 (Comparison Example)

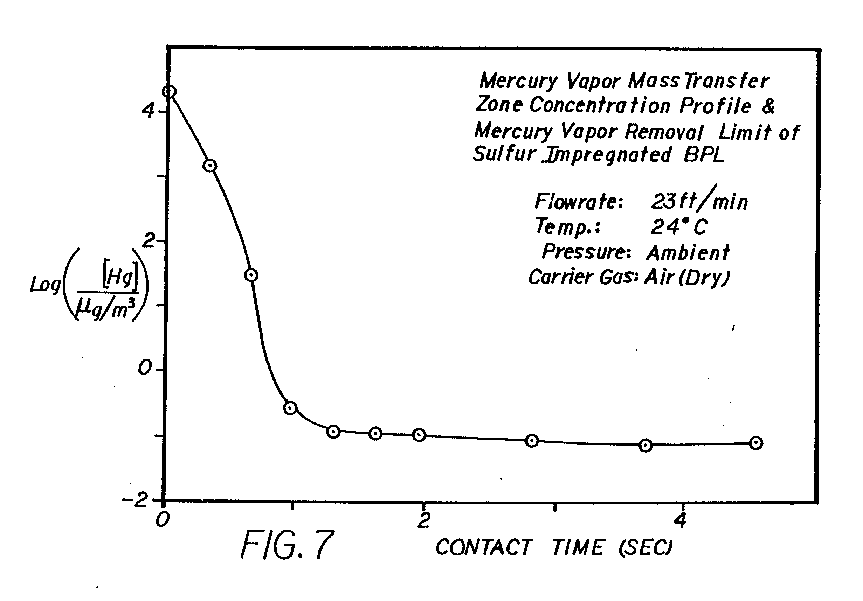

Dry air, having a high mercury vapor concentration, was passed through BPL, a coal-based activated carbon, (impregnated with 15 percent (w/w) sulfur, manufactured by Calgon Carbon Corporation, Pennsylvania U.S.A.) at 24°C and ambient pressure. Ports situated along the length of the column were sampled to determine the mercury vapor concentration in the air after known contact times with the adsorbent. The linear flow rate of the air was 23 ft/min. Results (FIGURE 7) show the mercury vapor removal limit of HGR to be 0.071 Kg/m$^3$ under these conditions.

## Example 11

MSC-V (a commercial slightly-activated, coal-based, molecular sieve carbon, manufactured by Calgon Carbon Corporation, Pittsburgh, Pennsylvania) was mixed at 150°C with a sufficient quantity of sublimed elemental sulfur to proved a 5 percent (w/w) sulfur loading until the mixture was uniform. This mixture was then heated at 150°C for 90 minutes.

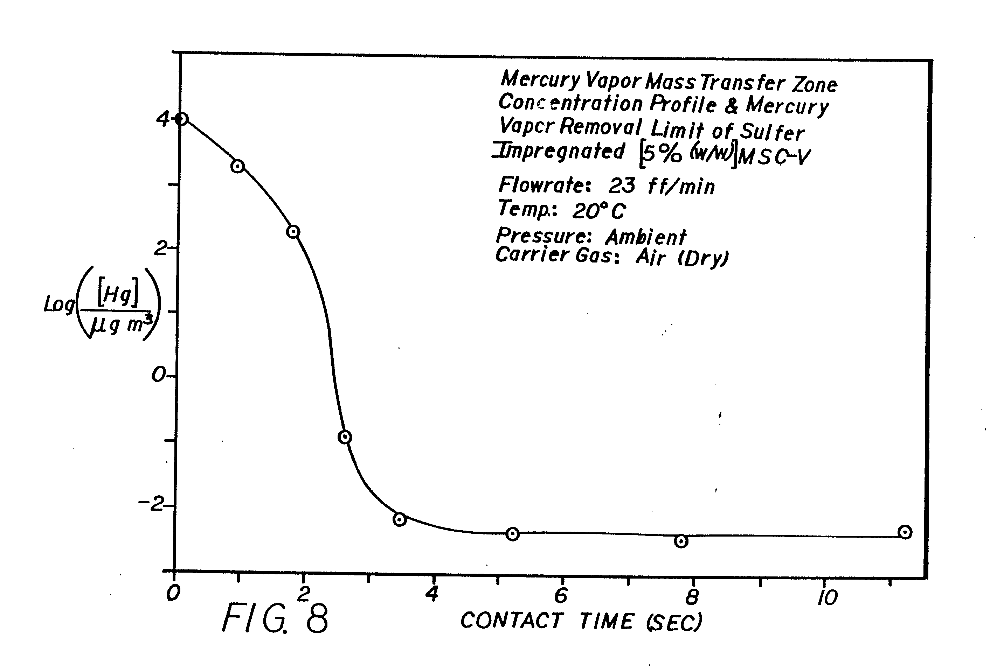

Dry air, having a high mercury vapor concentration, was passed through the sulfur impregnated MSC-V at 20°C and ambient pressure. Ports situated along the length of the column were sampled to determine the mercury vapor concentration in the air after known contact times with the adsorbent. The linear flow rate of the air was 23 ft/min. Results (FIGURE 8) show the mercury vapor removal limit of the sulfur impregnated MSC-V to be 0.004 Kg/m$^3$.

## Example 12

Calcined babassu nut char (10$^\times$30 mesh, calcined at 950°C) was mixed at 150°C with a sufficient quantity of sublimed elemental sulfur to provide a 5 percent (w/w) sulfur loading until the mixture was uniform. This mixture was then heated at 150°C for 90 minutes.

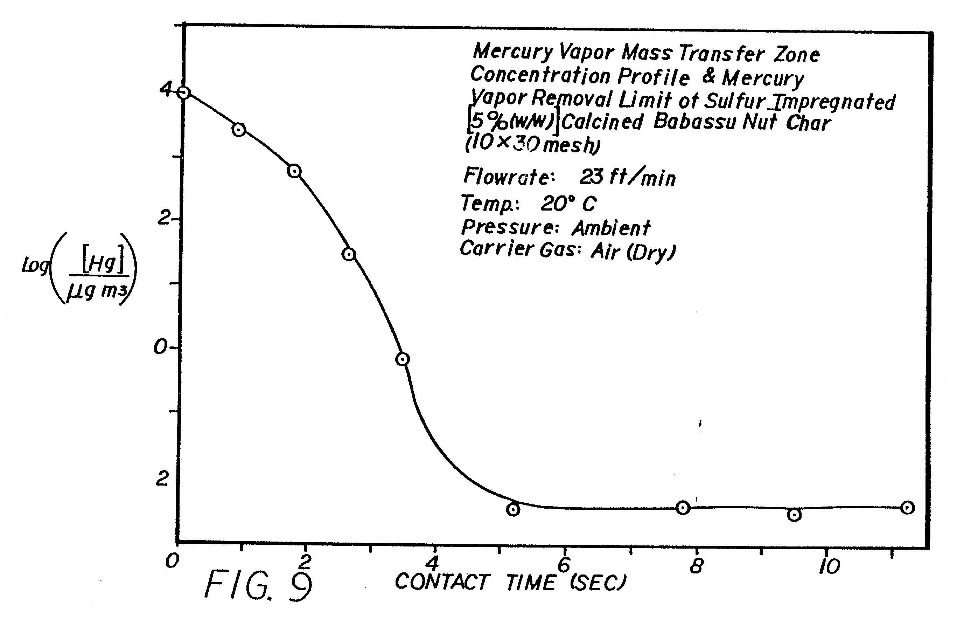

Dry air, having a high mercury vapor concentration, was passed through the sulfur impregnated calcined babassu nut char at 20°C and ambient pressure. Ports situated along the length of the column were sampled to determine the mercury vapor concentration in the air after known contact times with the adsorbent. The linear flow rate of the air was 23 ft/min. Results (FIGURE 9) show the mercury vapor removal limit of the sulfur impregnated MSC-V to be 0.004 Kg/m$^3$.

8

Example 13

Bergbau molecular sieve, a coal-based carbon molecular sieve (manufactured by Bergbau Forshung), was mixed at 150°C with a sufficient quantity of sublimed elemental sulfur to provide a 5 percent (w/w) sulfur loading until the mixture was uniform. This mixture was then heated at 150°C for 90 minutes.

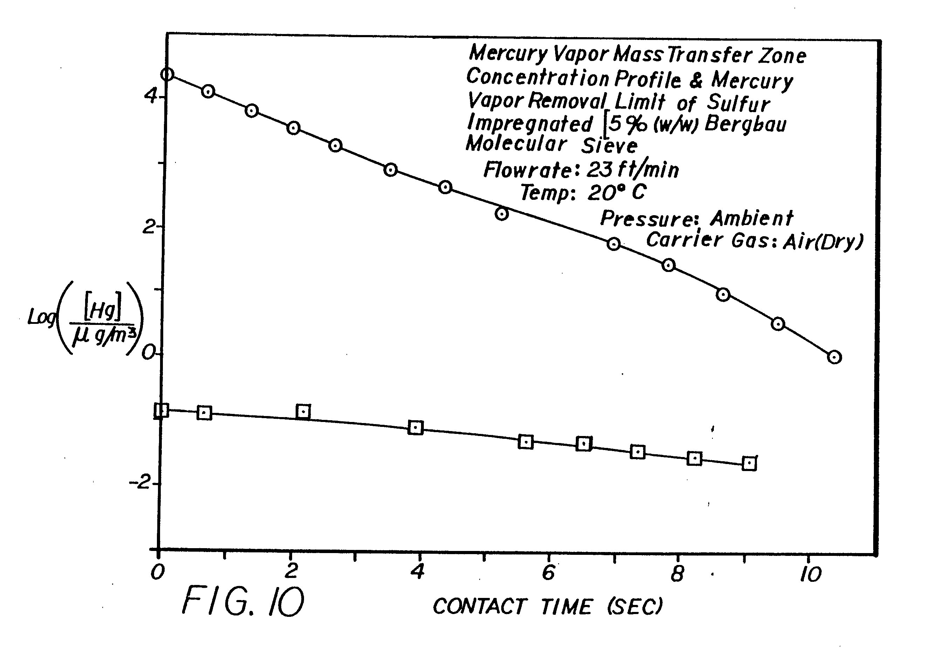

Dry air, having a high mercury vapor concentration, was passed through the sulfur impregnated Bergbau molecular sieve at 20°C and ambient pressure. Ports situated along the length of the column were sampled to determine the mercury vapor concentration in the air after known contact times with the adsorbent. The linear flow rate of the air was 23 ft/min. Results (FIGURE 10, upper line) show the mercury vapor removal kinetics of this sulfur impregnated carbon to be extremely slow. A mercury vapor removal limit was not reached within the column length. When the inlet mercury vapor concentration was reduced (FIGURE 10, lower line) the mercury vapor removal kinetics were further slowed. A mercury vapor removal limit appears to be reached at values slightly less than 0.025 Kg/m$^3$ for any practical contact time.

Example 14

There were next carried out, tests intended to show the comparative performance for the removal of mercury vapor from dry air by: (a) a granular activated carbon impregnated with sulfuric acid, to produce an $H_2SO_4$ concentration in the impregnated carbon of about 10% (w/w), which was prepared as described in Example 1 of the Kasai U.S. 3,876,393 patent (hereinafter the BPL-Adsorbent), and (b) a carbon molecular sieve, impregnated with sublimed elemental sulfur, to provide a 5 or 10% (w/w) sulfur-loading prepared as described in foregoing examples 2 through 7 (hereinafter the CMX-1 adsorbent).

The laboratory apparatus for testing the candidate adsorbents was comparable to the one employed in the foregoing working examples, and more specifically consisting of an air stream regulated to a flow of 2.0 liters per minute, which then passes through a mercury saturator upflow. The mercury-saturated air then proceeds to the adsorbtion beds of the experimental carbons. Sample ports are located between each adsorption bed for collection of mercury vapor samples, which samples were collected using a gas syringe or a Jerome collector coil, the mercury samples being analyzed using a Jerome Model 301 Gold Film Mercury Detector.

Dry air, having a high present mercury vapor concentration was passed at a linear flow rate of 23 ft. per min., through the afore-described BPL-type adsorbent at 22.-23.5 degrees C. and ambient pressure. The column containing the BPL material has sample ports located along its length from which the air stream could be sampled for vapor concentration. The contact time at each port was known.

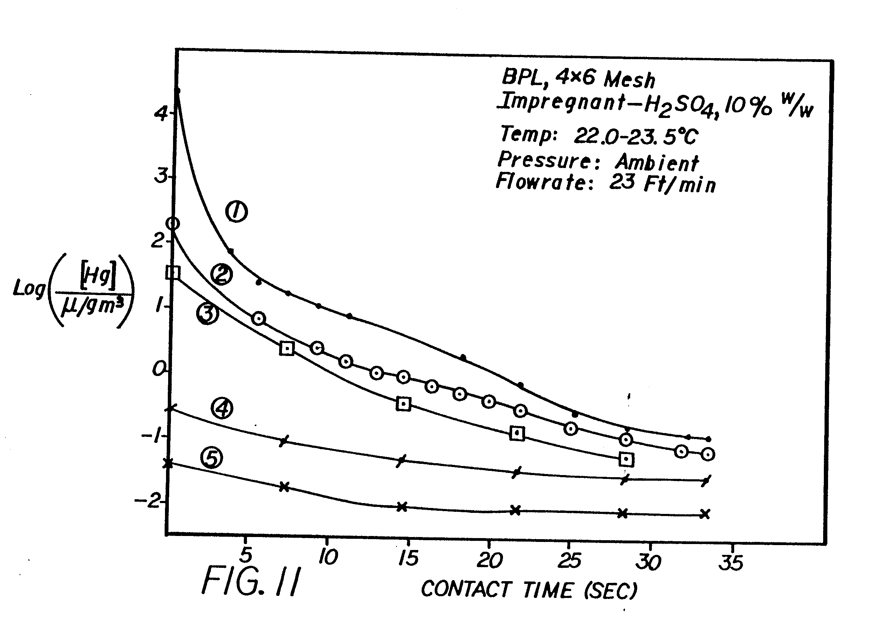

The data adduced was plotted on graph paper with the abscissa being the aggregate contact time in seconds, and the ordinate being the log of [Hg]/,ug/m.$^3$ (Figure 11), the uppermost curve of the graph, by using an initial mercury vapor concentration greater that P<(5.5 $^\times$ 10 $^{-6}$) Ps, showed a trend approaching a removal limit below 0.123 micrograms per cubic meter (ug/m.$^3$), and further showed for this adsorbent that the vapor removal kinetics were very slow.

The adsorption kinetics of the BPL-carbon were such that a Hg vapor removal limit was still not observed after about 33 seconds contact time (curve 1), while the inlet Hg vapor concentration was at saturation; that the inlet vapor concentration was reduced four times (curves 2-5), and that the removal limit of 0.0083 ug/m.$^3$ was not attained until the inlet Hg vapor concentration was decreased almost six orders of magnitude to about 0.04 ug/m.$^3$;

By overlaying the curves shown in Figure 11, an estimated contact time of about 65 seconds would be required for this activated carbon to reach a vapor removal limit at the stated conditions; which contrasts markedly with the about 10 second contact times noted for the aforedescribed CMX-1 adsorbents of the present Specification, performance date for which is adduced in Working Examples 1 through 9 inclusive (Figures 1-6, respectively), for them to reach their respective vapor removal limits when tested under substantially equivalent conditions.

**Claims**

1. A. carbon molecular sieve for removing mercury vapor from gas streams, having a nitrogen diffusivity of less than $2600 \times 10^{-8}$ cm$^2$/second, impregnated with from about 0.005 to about 15%, by weight, of a mercury reactive material, wherein said carbon molecular sieve is effective at mercury vapor concentrations less than $4 \times 10^{-6} \times P_s$, where $P_s$ is the mercury vapor saturation pressure at a given pressure and temperature.

2. The carbon molecular sieve of Claim 1, wherein the mercury reactive material is from about 0.01 to about 10 weight percent.

3. The molecular sieve of Claim 1, wherein the mercury reactive material is from about 3 to about 7 weight percent.

4. The carbon molecular sieve of Claim 1, wherein said mercury reactive material is sulfur or sulfides.

5. The carbon molecular sieve of Claim 1, wherein said carbon molecular sieve is selected from the group consisting of coconut shell char, babassu nut char, and coal char.

6. The carbon molecular sieve of Claim 1, having a nitrogen diffusivity of $10 \times 10^{-8}$ cm$^2$/second to $2600 \times 10^{-8}$ cm$^2$/second.

7. A process for removing mercury vapor from gas streams which comprise passing a gas stream containing mercury vapor into contact with a carbon molecular sieve, having a nitrogen diffusivity of less than $2600 \times 10^{-8}$ cm$^2$/second, impregnated with from about 0.005 to about 15 percent, by weight, of a mercury reactive material, wherein said carbon molecular sieve is effective at mercury vapor concentrations less than $4 \times 10^{-6} \times P_s$, is the mercury vapor saturation pressure at a given pressure and temperature.

8. The process of Claim 7, wherein the gas stream is natural gas.

9. The process of Claim 7, wherein the gas stream is air.

10. The process of Claim 7, wherein prior to contacting the gas stream with said mercury reactive impregnated carbon molecular sieve, said gas stream is first brought into contact with a carbon impregnated with a mercury reactive material.

11. The process of Claim 7, wherein prior to contacting the gas stream with said mercury reactive impregnated carbon molecular sieve, said gas stream is first brought into contact with a zeolite molecular sieve impregnated with a mercury reactive material.

12. The process of Claim 7, wherein said carbon molecular sieve has a nitrogen diffusivity of $10 \times 10^{-8}$ cm$^2$/second to $2600 \times 10^{-8}$ cm$^2$/second.

FIG. I

Log [Hg] vs Contact Time at 42-46°C
Adsorbent = Ex. I Coconut Char
Impregnant = S

| Ex. | Symbol | sulfer loading (% w/w) | Impregnation Temp.(°C)/Time(hrs) |
|---|---|---|---|
| 4 | + | 10 | 150/1.5 |
| 3 | ⊡ | 5 | 150/.75, then 170/.75 |
| 5 | × | 10 | 150/.75 then 165/.75 |
| 2 | ⊙ | 5 | 150/1.5 |

CONTACT TIME (SEC)

0 271 618

FIG. 2

0 271 618

FIG. 3

CONTACT TIME (SEC)

$Log\left(\dfrac{[Hg]}{\mu g/m^3}\right)$

Pressure: Ambient
Flowrate: 23 ft/min
Carrier Gas: Dry Air

⊙ Sulfur Impregnated
Example 1 Coconut Char

⊡ Union Carbide 1/16
Mol Sieve at 18°C

FIG. 4

Temp.: Ambient (~20°C)
Pressure: Ambient
Flowrate: 23 ft/min

—— Dry Air Carrier Gas

- - - - $H_2O$ Saturated Air
Carrier Gas

⊙ Sulfur Impregnated
Ex. I Coconut Char

X Sulfur Impregnated GRC-II

CONTACT TIME (SEC)

$Log\left(\dfrac{[Hg]}{\mu/m^3}\right)$

0 271 618

Mercury Vapor Mass Transfer Zone Concentration Profile and Mercury Vapor Removal Limit of $FeCl_3 \cdot 6H_2O$ Impregnated [2% (w/w)] Ex. I Coconut Char

Flowrate: 23 ft/min
Temp.: 20° C
Pressure: Ambient
Carrier Gas: Air (Dry)

$Log\left(\dfrac{[Hg]}{\mu g/m^3}\right)$

CONTACT TIME (SEC)

FIG. 5

Mercury Vapor Mass Transfer Zone Concentration Profile & Mercury Vapor Removal Limit of Iodine Impregnated [2.7% (w/w)KI + 1.2 %(w/w)I$_2$] Ex. I Coconut Char

Flowrate: 23 ft/min
Temp.: 20°C
Pressure: Ambient
Carrier Gas: Air (Dry)

$Log\left(\dfrac{[Hg]}{\mu g/m^3}\right)$

CONTACT TIME (SEC)

FIG. 6

0 271 618

FIG. 7

Mercury Vapor Mass Transfer Zone Concentration Profile & Mercury Vapor Removal Limit of Sulfer Impregnated [5% (w/w)] MSC-V

Flowrate: 23 ff/min
Temp.: 20°C
Pressure: Ambient
Carrier Gas: Air (Dry)

$Log\left(\dfrac{[Hg]}{\mu g\ m^3}\right)$

CONTACT TIME (SEC)

FIG. 8

Mercury Vapor Mass Transfer Zone Concentration Profile & Mercury Vapor Removal Limit of Sulfur Impregnated 5%(w/w) Calcined Babassu Nut Char (10×30 mesh)

Flowrate: 23 ft/min
Temp.: 20° C
Pressure: Ambient
Carrier Gas: Air (Dry)

FIG. 9

CONTACT TIME (SEC)

$Log\left(\dfrac{[Hg]}{\mu g \, m_3}\right)$

Mercury Vapor Mass Transfer Zone Concentration Profile & Mercury Vapor Removal Limit of Sulfur Impregnated [5% (w/w) Bergbau Molecular Sieve
Flowrate: 23 ft/min
Temp: 20° C
Pressure: Ambient
Carrier Gas: Air(Dry)

$Log\left(\dfrac{[Hg]}{\mu\,g/m^3}\right)$

CONTACT TIME (SEC)

FIG. 10

0 271 618

FIG. II

$Log\left(\dfrac{[Hg]}{\mu/gm^3}\right)$

CONTACT TIME (SEC)

BPL, 4×6 Mesh
Impregnant—$H_2SO_4$, 10% $^W/_W$

Temp: 22.0-23.5°C
Pressure: Ambient
Flowrate: 23 Ft/min

0 271 618

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 145 539 (CALGON CARBON CORP.)<br>* Pages 24-26, claims 1-10; pages 2-6 *<br><br>----- | 1-12 | B 01 J 20/20<br>B 01 D 53/34 |

**TECHNICAL FIELDS SEARCHED (Int. Cl.4)**

B 01 J

The present search report has been drawn up for all claims

| Place of search | Date of completion of the search | Examiner |
|---|---|---|
| THE HAGUE | 29-07-1987 | WENDLING J.P. |